# EUROPEAN PATENT APPLICATION

(11) **EP 4 386 027 A1**
(43) Date of publication of application: **19.06.2024**
(21) Application number: 22212781.3
(22) Date of filing: 12.12.2022
(51) Int. Cl.: C08G 18/16, C08G 18/80, C08G 18/18, C08G 18/32, C08G 18/34, C08G 18/42, C08G 18/66, C08G 18/73, C08G 18/76, C08G 18/78, C08G 18/79, C08K 5/00, C08K 5/524, C08L 75/04, C08L 75/06, C08G 73/10

(54) **SOLVENT-FREE PROCESS TO PRODUCE IMIDE-CONTAINING ISOCYANATE PREPOLYMERS**

(71) Applicant: BASF SE, 67056 Ludwigshafen am Rhein (DE)
(72) Inventor: YUNFEI, Guo, 5600 MB Eindhoven (NL); ZELJKO, Tomovic, 5600 MB Eindhoven (NL); CRISTADORO, Anna Maria, 49448 Lemfoerde (DE); KLEEMANN, Julian, 49448 Lemfoerde (DE); BOKERN, Stefan, 49448 Lemfoerde (DE); SIJBESMA, Rintje Pieter, 5612 AP Eindhoven (NL)
(74) Representative: Altmann Stößel Dick Patentanwälte PartG mbB

(57) **Abstract**

The present invention is directed to a process for preparing a prepolymer comprising imide groups by reacting an anhydride of a polycarboxylic acid with at least two carboxylic groups (DA) and an isocyanate (11) in the presence of catalyst composition containing at least component (C1) and optionally one or more of components (C2) and (C3). The present invention is also directed to the prepolymer obtained as well as the use of said prepolymer for the preparation of polyurethanes.

## Description

The present invention is directed to a process for preparing an isocyanate prepolymer comprising imide groups by reacting an anhydride of a polycarboxylic acid with at least two carboxylic groups (DA) and an isocyanate, preferably a polyisocyanate (i1) in the presence of a catalyst composition comprising at least component (C1) and optionally one or more of components (C2) and (C3). The present invention is also directed to the prepolymer obtained as well as the use of said prepolymer for the preparation of polyurethanes.

The introduction of imide moieties into polyurethane structure offers materials with improved thermal and chemical stability and intrinsic flame retardancy.

Processes for the synthesis of imide containing prepolymers are in principle known. For example WO2011147723 A1 discloses a process using organic solvents such as NMP or acetone and water as a catalyst. WO2014023796 A1 discloses a process for producing a PU foam comprising imide groups as well as polyisocyanates comprising imide groups. The patent describes the synthesis of imide containing isocyanate prepolymer via reaction of pyromellitic dianhydride (PMDA) and polymeric diphenylmethane diisocyanate at 55 °C using water as a catalyst and acetone as a solvent.

US 2014/0154407 A1 discloses the synthesis of polyamide-imide resin by reacting 4,4'-diphenylmethane diisocyanate (MDI), polymeric MDI, trimellitic anhydride (TMA) and 3,3',4,4'-benzophenone tetracarboxylicdianhydride (BTDA) in T-butyrolactone and NMP solution at 140 °C for 2 h. US 20090240019 A1 describes the preparation of imide-modified PU elastomers via three steps: first urethane prepolymer was synthesized by reacting 4,4'-diphenylmethane diisocyanate (MDI) and PTHF 1000 at 80 °C for 2 h. Next, the urethane prepolymer was reacted with 4,4'-diaminodiphenylmethane (MDA) in NMP at room temperature for 24 h. After that pyromellitic dianhydride (PMDA) was added in the obtained urethane-urea prepolymer solution and the reaction was carried out at 150 °C for 2 h. The polyimide sheet was obtained after centrifugal molding and heat treatment at 200 °C for 2 h. CN 103755956 A describes the preparation of imide-containing prepolymer via reaction between polymeric MDI and 3,3',4,4'-benzophenone tetracarboxylic dianhydride (BTDA) in NMP. The main disadvantage of these processes is the use of a toxic solvent NMP to dissolve the prepolymers and to carry out the imide reaction. Furthermore, the removal of NMP is very difficult and requires a high energy input.

Also in the academic literature, there are many examples which describe the synthesis of polyurethanes containing imide moieties using various approaches, for example in B. Masiulanis et al. J. Appl. Polym. Sci., 1985, 30, 2731-2741, M. Meena et al. J. Appl. Polym. Sci., 2022, 139, e52508. However, the synthesis is always carried out in organic solvents such as NMP, DMF, DMSO. Such solvents and technologies are not suitable on industrial scale.

Beside the use of organic solvents, the reaction conditions disclosed in the state of the art can lead to incomplete reaction between the anhydride and the isocyanate leading to a high acid value of the isocyanate prepolymer which can hinder and completely prevent the polyurethane reaction in some cases.

Therefore, it is desired to develop a solvent free process, preferably a process which will lead to a high degree of conversion of the reaction of dianhydrides with isocyanates and imide formation.

It was an object of the present invention to provide a process for the synthesis of imide containing isocyanate prepolymers which avoids the disadvantages of the processes known from the state of the art.

The problem is solved in accordance with the invention by a process for preparing a prepolymer comprising step (i)
(i) reacting an anhydride of a polycarboxylic acid with at least two carboxylic groups (DA) and an isocyanate (i1) in the presence of catalyst composition containing at least component (C1) and optionally one or more of components (C2) and (C3) to obtain a prepolymer comprising imide groups.

It has surprisingly been found out that the process can be carried avoiding large amounts of solvents, in particular solvents which are difficult to remove from the products obtained in the process. Furthermore, it has been found that this process allows the full conversion of all anhydride groups present in imide groups after reaction with isocyanate.

The process according to the present invention comprises at least step (i) but may also comprise further steps. The process may for example comprise purification steps or separation steps.

According to step (i) an anhydride of a polycarboxylic acid with at least two carboxylic groups (DA) and an isocyanate (i1) in the presence of catalyst composition containing component (C1) and optionally one or more of components (C2) and (C3) are reacted to obtain a prepolymer comprising imide groups.

According to the present invention, component (C1) may be selected from the group consisting of primary amines, secondary amines, ureas, carbamates, amides, imides, alcohols, phenols, malonates, acetoacetates and water. Preferably, component (C1) is selected from the group consisting of secondary amines.

Component (C2) may be selected from the group consisting of tertiary amines and metal catalysts. Preferably, component (C2) is selected from the group consisting of tertiary amines.

Component (C3) may be added to the reaction mixture. Suitable as component (C3) are for example compounds with a molecular weight of less than 400 g/mol with a dielectric constant from 5 to 70 at 20-25 °C. (the dielectric constant of various compounds can be found in Appendix A in C. Reichardt, and T. Welton, Solvents and Solvent Effects in Organic Chemistry, Fourth Edition, WILEY-VCH Verlag GmbH & Co. KGaA, Weinheim, 2011).

Suitable anhydrides of polycarboxylic acids (DA) with at least two carboxylic groups are in principle known. According to the present invention, suitable aromatic polycarboxylic acids that have at least two COOH groups per molecule, or the respective anhydrides, preferably are present in low-molecular weight, that is to say non-polymeric, form. Suitable polycarboxylic acids having at least COOH groups in which two carboxylic acids groups are present as anhydride and a further group is present as a free carboxylic acid are also comprised.

In a preferred embodiment of the present invention, the polycarboxylic acid with at least two carboxylic groups is a polycarboxylic acid having 2, 3, 4, 5 or 6 COOH groups per molecule.

Examples of suitable polycarboxylic acids and anhydrides (DA) thereof are 1,2,3-benzenetricarboxylic acid and 1,2,3-benzenetricarboxylic dianhydride, 1,3,5-benzenetricarboxylic acid (trimesic acid), preferably 1,2,4-benzenetricarboxylic acid (trimellitic acid), trimellitic anhydride and, in particular, 1,2,4,5-benzenetetracarboxylic acid (pyromellitic acid) and 1,2,4,5-benzenetetracarboxylic dianhydride (pyromellitic dianhydride), 3,3',4,4"-benzophenonetetracarboxylic acid, 3,3',4,4"-benzophenonetetracarboxylic dianhydride, 3,3',4,4'-biphenyltetracarboxylic acid, 3,3',4,4'-biphenyltetracarboxylic dianhydride, 4,4'-oxydiphthalic acid, 4,4'-oxydiphthalic anhydride, in addition benzenehexacarboxylic acid (mellitic acid) and anhydrides of mellitic acid.

Other suitable polycarboxylic acids and anhydrides thereof are mellophanic acid and mellophanic anhydride, 1,2,3,4-benzenetetracarboxylic acid and 1,2,3,4-benzenetetracarboxylic dianhydride, 3,3',4,4'-biphenyltetracarboxylic acid and 3,3',4,4'-biphenyltetracarboxylic dianhydride, 2,2',3,3'-biphenyltetracarboxylic acid and 2,2',3,3'-biphenyltetracarboxylic dianhydride, 1,4,5,8-naphthalenetetracarboxylic acid and 1,4,5,8-naphthalenetetracarboxylic dianhydride, 1,2,4,5-naphthalenetetracaboxylic acid and 1,2,4,5-naphthalenetetracarboxylic dianhydride, 2,3,6,7-naphthalenetetracarboxylic acid and 2,3,6,7-naphthalenetetracarboxylic dianhydride, 1,4,5,8-decahydronaphthalenetetracarboxylic acid and 1,4,5,8-decahydronaphthalenetetracarboxylic dianhydride, 4,8-dimethyl-1,2,3,5,6,7-hexahydronaphthalene-1,2,5,6-tetracarboxylic acid and 4,8-dimethyl-1,2,3,5,6,7-hexahydronaphthalene-1,2,5,6-tetracarboxylic dianhydride, 2,6-dichloronaphthalene-1,4,5,8-tetracarboxylic acid and 2,6-dichloronaphthalene-1,4,5,8-tetracarboxylic dianhydride, 2,7-dichloronaphthalene-1,4,5,8-tetracarboxylic acid and 2,7-dichloronaphthalene-1,4,5,8-tetracarboxylic dianhydride, 2,3,6,7-tetrachloronaphthalene-1,4,5,8-tetracarboxylic acid and 2,3,6,7-tetrachloronaphthalene-1,4,5,8-tetracarboxylic dianhydride, 1,3,9,10-phenanthrenetetracarboxylic acid and 1,3,9,10-phenanthrenetetracarboxylic dianhydride, 3,4,9,10-perylenetetracarboxylic acid and 3,4,9,10-perylenetetracarboxylic dianhydride, bis(2,3-dicarboxyphenyl)methane and bis(2,3-dicarboxyphenyl)methane dianhydride, bis(3,4-dicarboxyphenyl)methane and bis(3,4-dicarboxyphenyl)methane dianhydride, 1,1-bis(2,3-dicarboxyphenyl)ethane and 1,1-bis(2,3-dicarboxyphenyl)ethane dianhydride, 1,1-bis(3,4-dicarboxyphenyl)ethane and 1,1-bis(3,4-dicarboxyphenyl)ethane dianhydride, 2,2-bis(2,3-dicarboxyphenyl)propane and 2,2-bis(2,3-dicarboxyphenyl)propane dianhydride, 2,3-bis(3,4-dicarboxyphenyl)propane and 2,3-bis(3,4-dicarboxyphenyl)propane dianhydride, bis(3,4-carboxyphenyl)sulfone and bis(3,4-carboxyphenyl)sulfone dianhydride, bis(3,4-carboxyphenyl)ether and bis(3,4-carboxyphenyl)ether dianhydride, 3,3',4,4'-diphenylsulfonetetracarboxylic acid and 3,3',4,4'-diphenylsulfonetetracarboxylic dianhydride, hydroquinone diphthalic acid and hydroquinone diphthalic anhydride, 4,4'-(4,4'-isopropylidenediphenoxy)bis(phthalic acid) and 4,4'-(4,4'-isopropylidenediphenoxy)bis(phthalic anhydride), 2,3,5,6-pyrazinetetracarboxylic acid and 2,3,5,6-pyrazinetetracarboxylic dianhydride, 2,3,4,5-thiophenetetracarboxylic; acid and 2,3,4,5-thiophenetetracarboxylic dianhydride.

Suitable are also compounds having a mono-anhydride group, including for example 4-amino-1,8-naphthalic anhydride, 3,6-dichlorophthalic anhydride, 4,5-dichlorophthalic anhydride, tetrachlorophthalic anhydride, 3,6-difluorophthalic anhydride, 4,5-difluorophthalic anhydride, tetrafluorophthalic anhydride, 2,3-diphenylmaleic anhydride, 2,3-diphenylmaleic anhydride, phthalic anhydride, 3-nitrophthalic anhydride, 4-nitrophthalic anhydride, 2,3-pyrazinedicarboxylic anhydride, or 3,4-pyridinedicarboxylic anhydride. Specifically, the mono-anhydride group is phthalic anhydride.

According to a further embodiment, the present invention is also directed to the process as disclosed above, wherein the anhydride of a polycarboxylic acid with at least two carboxylic groups (DA) is a dianhydride selected from the group of anhydrides of a polycarboxylic acid with 2, 3 or 4 carboxylic groups.

According to a further embodiment, the present invention is also directed to the process as disclosed above, wherein the anhydride of a polycarboxylic acid with at least two carboxylic groups (DA) is pyromellitic dianhydride (PMDA).

One embodiment of the present invention is also directed to the process as disclosed above, wherein the anhydride of a polycarboxylic acid with two carboxylic groups (DA) is phthalic anhydride.

According to the present invention, also mixtures of two or more anhydrides can be used. Suitable are for example mixtures containing pyromellitic dianhydride (PMDA) and phthalic anhydride in a ratio from 9:1 to 1:9, more preferable from 4:1 to 1:1 and especially in a ratio of 1:1.

In the context of the present invention, the isocyanate (i1) preferably is a diisocyanate or polyisocyanate. Suitable isocyanates (i1) are for example polyfunctional aromatic and/or aliphatic isocyanates, for example diisocyanates.

Typically, the isocyanate group functionality of the isocyanate (I1) is preferably in the range from 1.8 to 5.0, more preferably in the range from 1.9 to 3.5 and most preferably in the range from 2.0 to 3.0.

For the purpose of the present invention, principally any isocyanate can be employed as isocyanate (i1). In the context of the present invention, the isocyanate is also referred as "polyisocyanate". That is to say, at least one isocyanate preferably comprises a plurality of NCO functional groups, e.g. 2, 3 or 4 NCO functional groups, or any value or ranges of values therein. It is to be understood that at least one polyisocyanate includes both monomeric diisocyanates, i.e. compounds having 2 NCO functional groups isocyanates, and oligomeric forms thereof having on average more than 2 NCO functional groups, e.g. from 2 to 4 NCO functional groups.

The isocyanates used for producing the polyurethanes according to the invention comprise all polyisocyanates known for the production of polyurethanes. These comprise the aliphatic, cycloaliphatic and aromatic divalent or polyvalent isocyanates known from the prior art and any desired mixtures thereof. Examples include 2,2'-, 2,4'- and 4,4'-diphenylmethane diisocyanate, the mixtures of monomeric diphenylmethane diisocyanates and higher nuclear homologous of diphenyl-methane diisocyanate (polymeric MDI), isophorone diisocyanate (IPDI) or its oligomers, 2,4- or 2,6-tolylene diisocyanate (TDI) or mixtures thereof, tetramethylene diisocyanate or its oligomers, hexamethylene diisocyanate (HDI) or its oligomers, H₁₂-MDI, naphthylene diisocyanate (NDI) or mixtures thereof.

Preference is given to 2,4- and/or 2,6-tolylene diisocyanate (TDI) or mixtures thereof, monomeric diphenylmethane diisocyanates and/or higher nuclear homologous of diphenylmethane diisocyanate (polymeric MDI) and mixtures thereof. Further possible isocyanates are recited for example in "Kunststoffhandbuch", Volume 7,"Polyurethane", Carl Hanser Verlag, 3rd edition 1993, chapters 3.2 and 3.3.2.

The isocyanates may be employed in the form of polyisocyanate prepolymers. These polyisocyanate prepolymers are obtainable by reacting an excess of the above-described isocyanates (i1) with polymeric compounds having isocyanate-reactive groups (in the following also referred to as component (b)) and/or chain extenders (in the following also referred to as component (c)) for example at temperatures of 20°C to 100°C, preferably at about 80°C, to afford the isocyanate prepolymer.

Polymeric compounds having isocyanate-reactive groups (b) and chain extenders (c) are known to those skilled in the art and described for example in "Kunststoffhandbuch [Plastics Handbook], volume 7, Polyurethane [Polyurethanes]", Carl Hanser Verlag, 3rd edition 1993, chapter 3.1. Thus, also employable for example as polymeric compounds having isocyanate-reactive groups (b) are the polymeric compounds having isocyanate-reactive groups. If an isocyanate prepolymer is employed as isocyanate (i1) this preferably has an isocyanate content (NCO content) of more than 5%, more preferably 10% to 45%, yet more preferably 12% to 40%, particularly preferably 15% to 35% and especially 15% to 30% and the most preferably 15% to 25% by weight.

According to a further embodiment, the present invention is also directed to the process as disclosed above, wherein the isocyanate (i1) is selected from the group consisting of aliphatic diisocyanates, alicyclic diisocyanates and aromatic diisocyanates or aromatic/aliphatic oligomeric or polymeric isocyanates.

The term "aliphatic diisocyanate" refers to molecules having two isocyanate groups attached to an acyclic saturated hydrocarbon radical which typically comprises 4 to 18 carbon atoms. Examples of aliphatic diisocyanates include, but are not limited to, tetramethylene-1,4-diisocyanate, pentamethylene-1,5-diisocyanate, hexamethylene 1,6-diisocyanate, decamethylene diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, etc., and mixtures thereof. Preferred aliphatic diisocyanates are pentamethylene-1,5-diisocyanate, hexamethylene-1,6-diisocyanate, 2,2,4-trimethyl-hexamethylene-1,6-diisocyanate and 2,4,4-trimethyl-hexamethylene-1,6-diisocyanate, and mixtures thereof.

The term "alicyclic diisocyanate" refers to molecules having two isocyanate groups attached to a saturated hydrocarbon radical bearing at least one cyclic moiety. Alicyclic diisocyanate typically comprises 6 to 18 carbon atoms. Examples of alicyclic diisocyanates include, but are not limited to cyclobutane-1,3-diisocyanate, 1,2-, 1,3- and 1,4-cyclohexane diisocyanate, 2,4- and 2,6-diisocyanato-1-methylcyclohexane (= 2,4- and 2,6-hexahydrotoluenediisocyanate), 4,4'- and 2,4'-dicyclohexyldiisocyanates, isocyanatomethylcyclohexane isocyanate, isocyanatoethylcyclo-hexane isocyanates, bis(isocyanatomethyl)cyclohexane, 4,4'-diisocyanatodicyclohexylmethane (H12-MDI), isophorone diisocyanate and mixtures thereof. Preferred alicyclic diisocyanates are 1,2-, 1,3- and 1,4-cyclohexane diisocyanate, 2,4- and 2,6-diisocyanato-1-methylcyclohexane, 4,4'- and 2,4'-dicyclohexyldiisocyanates, bis(isocyanatomethyl)cyclohexane, 4,4'-diisocyanatodicyclohexylmethane (12-MDI), isophorone diisocyanate and mixtures thereof. The isophorone diisocyanate is frequently a mixture, specifically a mixture of the cis and trans isomers, generally in a mass ratio of 60:40 to 80:20, more particularly in a ratio of 70:30 to 75:25, and particularly especially in a ratio of about 75:25.

The term "aromatic diisocyanate", refers to molecules having two isocyanate groups attached directly and/or indirectly to the aromatic ring. Aromatic diisocyanates typically have 8 to 18 carbon atoms. Examples of aromatic diisocyanates include, but are not limited to, 1,2-, 1,3-, and 1,4-phenylene diisocyanates, naphthylene-1, 5-diisocyanate, 2,4- and 2,6-toluene diisocyanate, 2,4'-, 4,4'- and 2,2'-biphenyl diisocyanates, 2,2'-, 2,4'- and 4,4'-diphenylmethane diisocyanate, 1,2-, 1,3- and 1,4-xylylene diisocyanates and m-tetramethylxylyene diisocyanate (TMXDI), and mixtures thereof. Preferred aromatic diisocyanates are 2,4- and 2,6-toluene diisocyanate, 2,4'-, 4,4'- and 2,2'-biphenyl diisocyanates, 2,2'-, 2,4'- and 4,4'-diphenylmethane diisocyanate, 1,2-, 1,3- and 1,4-xylylene diisocyanates and m-tetramethylxylyene diisocyanate (TMXDI) and mixtures thereof.

The isocyanates may be employed in the form of mixture of mono-, di- and polymeric isocyanates. Examples of mono-isocyanates include, but are not limited to, phenyl-isocyanate, p-tolyl-isocyanate, hexyl-isocyanate, octyl-isocyanate, dodecyl-isocyanate, octadecyl-isocyanate, cyclohexyl-isocyanate.

The relative amount of the isocyanate composition is preferably chosen such that the molar ratio of NCO groups to isocyanate-reactive groups provided in step (i) may vary depending on the NCO content of the polyurethane to be prepared. Generally, the NCO group content of the obtained product is in the range of from 0.1% and 45% by weight. Typically, the polyisocyanate and the anhydride are used in a weight ratio ranging from 99:1 to 4:1, more preferably from 97:3 to 9:1 and especially from 97:3 to 95:5.

According to step (i), the anhydride and the isocyanate are reacted in the presence of catalyst component (C1), catalyst component (C2) and optionally (C3).

According to the present invention, component (C1) and optionally a component (C2) and (C3) are used in step (i).

According to the present invention, component (C1) may be selected from the group consisting of primary amines, secondary amines, ureas, carbamates, amides, imides, alcohols, phenols, malonates, acetoacetates and water. Preferably, component (C1) is selected from the group consisting of secondary amines. Mixtures of two or more of these may also be used in the context of the present invention.

Suitable amines are for example disclosed in US5969182.

Suitable secondary amines (C1) may be for example amines of the general formula (I): 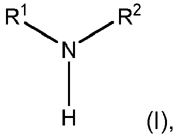 in which R1 and R2 are each independently selected from the group consisting of any alkyl, aryl, allyl, aminoalkyl, alkylaryl, aminoalkylaryl, whether straight-chain, branched, cyclic, saturated or unsaturated.

Preferably, R¹ and R² may independently be selected from C₁-C₂₀-alkyl, C₆-C₁₈-aryl; C₂-C₂₀-alkenyl, C₃-C₈-cycloalkyl, -(C₁-C₂₀-alkylene)-COOR³, -(C₁-C₂₀-alkylene)-CONR⁴R⁵, -COR³, -(C₁-C₂₀-alkylene)-CN, -(C₁-C₂₀-alkylene)-SO₂R⁶, -(C₁-C₂₀-alkylene)-R⁶, -[(CH₂)ₘ-X-]ₚ-[(CH₂)ₙ-Y-]-[(CH₂)ₒ]r-Z,
and R¹ and R² can also be connected forming cyclic structures as aliphatic or aromatic rings,
m, n, o 0 to 10;
p, q, r 0 to 50,000;
XO, NH;
Y N-[(CH₂)ₘ-X-]ₚ-[(CH₂)ₙ-Y-]_{q}-[(CH₂)ₒ]ᵣ-Z;
ZOH, NH;
R³ H, C₁-C₂₀-alkyl, C₂-C₁₀-alkenyl, C₃-C₈-cycloalkyl, C₆-C₁₈-aryl, Na, K, Li, Ca, Mg, N(R⁷)₄;
R⁴ and R⁵ independently of one another H, C₁-C₂₀-alkyl, C₂-C₁₀-alkenyl, C₃-C₈-cycloalkyl, C₆-C₁₈-aryl;
R⁶ OR⁸, N(R⁹)₂;
R⁷ H, C₁-C₂₀-alkyl;
R⁸ H, C₁-C₂₀-alkyl, C₂-C₁₀-alkenyl, C₃-C₈-cycloalkyl, C₆-C₁₈-aryl, Na, K, Li, Ca, Mg, N(R⁷)₄;
R⁹ H, C₁-C₂₀-alkyl, C₂-C₁₀-alkenyl, C₃-C₈-cycloalkyl, C₆-C₁₈-aryl,
Cyclic structure C₂-C₂₀ alkyl, C₂-C₁₀-alkenyl, C₆-C₁₈-aryl, with or without ketone, ether, sulfur, N(R⁹) or mixture of each; with or without branches of C₂-C₂₀ alkyl, C₂-C₁₀-alkenyl, C₆-C₁₈-aryl, N(R⁹).

Polysecondary amines as disclosed in US9938479 as suitable as well in the context of the present invention. Suitable compounds are for example polyethyleneimines.

Suitable compounds are for example dibutylamine, dipropylamine, diethylamine, dimethylamine, dipentylamine, dihexylamine, diheptylamine, dioctylamine, dinonylamine, didecylamine, didodecanamine, Bis(2-ethylhexyl)amine, dioctadecylamine, N-ethylmethylamine, N-methylisopropylamine, N-methylpropylamine, N-methylisobutylamine, N-methylbutylamine, N-methylpentylamine, N-ethylpropylamine, N-ethylisopropylamine, N-ethylbutylamine, di-(2-picolyl)amine, N-propylbutylamine, N-sec-butylpropylamine, N-(2-methoxyethyl)methylamine, N-(2-methoxyethyl)ethylamine, N-(2-methoxyethyl)propylamine, N-(2-methyoxyethyl)isopropylamine, hexamethyleneimine, N-tert-butylehtylamine, N,N,N"-trimethylethylenediamine, N-allyl-N-tert-butylamine, N-methylcyclohexylamine, 3-(propylamino)propanenitrile, (butylamino)acetonitrile, methylaminoacetonitrile, 3-(methylamino)propionitrile, 3,3'-iminodipropionitrile, dipropargylamine, iminodiacetonitrile, N-isobutylamine, N,2-dimethyl-1-propanamine, N,N'-diethylehtylene-diamine, N,N'-dimethylethylenediamine, N,N'-diethyl-1,3-propanediamine, N-methylacetamide, N-ethylacetamide, 1,3-dimethylurea, 1,3-diethylurea, 1,3-dicyclohexylurea, diphenylurea, N,N'-diphenylthiourea, 1,3-dicyclohexylthiourea, N,N'-diethylthiourea, 1,3-dimethylthiourea, 1,3-diiso-propylthiourea, 1,3-dibutylthiourea, 1-methyl-3-phenylurea, 1-benzyl-3-phenylthiourea, 1,3-di(p-tolyl)thiourea, N-methylaniline, N-ethylaniline, 2-fluoro-N-methylaniline, N-methyl-o-toludine, N-methyl-m-toluidine, N-methyl-p-toludine, N-methyl-o-anisidine, N-methyl-p-anisidine, 2-chloro-N-methylaniline, 4-chloro-N-methylaniline, methyl 2-methylaminobenzoate, methyl 4-methylaminobenzoate, N-methyl-4-nitroaniline, N-phenylnaphthylamine, diphenylamine, N-methylbenzylamine, acetanilide, acetoacetanilide, thioacetanilide, 2-benzoylacetanilide, 3',4'-dimethylacetanilide, imidazole, 2-imidazolelidione, indoline, isoindoline, 2-ethyl-2-imidazoline, 1-methylimidazolidin-2-one, 4,4-dimethyl-2-imidazolidinethione, 3-pyrroline, pyrrolidine, 2-pyrrolidione, 3-(methylamino)pyrrolidine, N,N'-dimethyl-3-aminopyrrolidine, 3-(ethylamino)pyrroidine, 3-(ethylamino)pyrrolidine, 4-(methylamino)pyridine, 3-(methylamino)pyridine, 2-(methylamino)pyridine, 2-(ethylamino)pyridine, 3-(methylaminomethyl)pyridine, 2-methylpiperazine, 1-methylpiperazine, 5-methyl-2-pyrrolidone, 2-methyl-2-imidazoline, 2-imidazolidinone, piperazine, 2,5-dimethylpiperazine, 1-ethylpiperazine, morpholine, 3-morpholinone, thiomorpholine, 2,6-dimethylmorpholine, benzotriazole, triazoles, 2-oxazolidone, thiazolidine, thiazolidine-2-one, 2-piperazinone, homopiperazine, 3-methylpiperidine, 2-methylpiperidine, 4-methylpiperidine, 3,5-dimethylpiperidine, 2,6-dimethylpiperidine, 2-ethylpiperidine, 4-dimethylamino-2,2,6,6-tetramethylpiperidine, 2,2,6,6-tetramethylpiperidine, 1-methyl-4-[1-(4-piperidyl)-4-piperidyl]piperazine, 3,3,6,9,9-pentamethyl-2,10-diazabicyclo[4.4.0]dec-1-ene, 2,4-piperidinedione, 2,3-dihydro-7-azaindole, ε-caprolactam, 4-(tert-butyl)caprolactam, N-acetylcaprolactam, N-methylcaprolactam, ε-thiocaprolactam, N-vinyl-ε-caprolactam, laurocapram, β-propiolactam, γ-butyrolactam, δ-valerolactam, ω-heptalactam, ω-octalactam, ω-laurinlactam, 1-aza-2-cyclooctanone, 1,2-aminododecanolactam, 2-piperidone, hydantoin, 1-methylhydantoin, tetrahydro-2-pyrimidinone, 2,4-thiazolidinedione, 2,2-dimethylthiazolidine, phthalimide, pyromellitic diimide, maleimide, succinimide, glutarimide, cyanuric acid, parabanic acid, glycine anhydride, 1,3,5-trizainane-2,4-dione, methylaminoacetaldehyde dimethyl acetal, glycoluril, particularly preferred phthalimide, dibutylamine, N-methylaniline and the most preferred dibutylamine or N-methylaniline.

Component (C2) may be selected from the group consisting of tertiary amines and metal catalysts. Preferably, component (C2) is selected from the group consisting of tertiary amines. Mixtures of two or more of these may also be used in the context of the present invention.

Tertiary amines suitable as component (C2) are for example strong basic amines such as 2,3-dimethyl-3,4,5,6-tetrahydropyrimidine, tertiary amines such as triethylamine, tributylamine, dimethylbenzylamine, dicyclo-hexylmethylamine, dimethylcyclohexylamine, N,N,N',N'-tetramethyl-diaminodiethyl ether, 4-dimethylaminopyridine, bis(dimethylaminopropyl)urea, N-methyl- or N-ethylmorpholine, N-cyclohexyl morpholine, N,N,N',N'-tetramethyl ethylenediamine, N,N,N',N'-tetramethyl butanediamine, N,N,N',N'-tetramethyl hexanediamine-1,6, pentamethyldiethylenetriamine, tetramethyldiaminoethyl ether, bis(2-dimethylaminoethyl)ether, dimethylpiperazine, N-dimethyl-aminoethylpiperidine, 1,2-dimethylimidazole, 1-azabicyclo-[3,3,0]octane, 1,8-diazabicyclo[5.4.0]-7-undecene (DBU),1-azabicyclo-[2,2,0]octane, 1,4-diazabicyclo[2,2,2]octane (dabco), quinuclidine and alkanolamine compounds such as triethanolamine, triisopropanolamine, N-methyl- and N-ethyl diethanolamine, dimethylaminoethanol, 2-(N,N-dimethylaminoethoxy)ethanol, N,N,N '-trimethylaminoethyl-ethmolamine, N,N',N"-tris-(dialkylaminoalkyl)hexahydrotriazines, e.g. N,N',N"-Tris-(dimethylaminopropyl)-shexahydrotriazine, and triethylenediamine.

Suitable tertiary amines are in particular triethylamine, diisopropylethylamine, tributylamine, dimethylcyclohexylamine, 4-dimethylaminopyridine, dimethylaniline, 4-methylmorpholine, 4-ethylmorpholine, 1,8-diazabicyclo[5.4.0]-7-undecene, 1,4-diazabicyclo[2.2.2]octane.

Compounds suitable as component (C2) include, but not limited to, tin compounds such as tin octoate, dibutyltin dilaurate, bismuth neodecanoate or bismuth dioctoate, and tertiary amines such as dimethylbenzylamine, dimethylcyclohexylamine, trimethylamine, 1,4-diazabicyclo[2.2.2]octane. Mixtures of two or more of these may also be used in the context of the present invention.

Preferably, component (C1) is selected from the group consisting of dibutylamine and n-methylaniline. Component (C2) preferably is selected from the group consisting of dimethylcyclohexylamine (DMCHA), diisopropylethylamine, tributylamine. According to a preferred embodiment, catalyst component (C1) is N-methylaniline and component (C2) is dimethylcyclohexylamine (DMCHA). According to an alternative preferred embodiment, component (C1) is dibutylamine and component (C2) is dimethylcyclohexylamine (DMCHA). According to another alternative preferred embodiment, component (C1) is phthalimide and component (C2) is dimethylcyclohexylamine (DMCHA).

According to a further embodiment, the present invention is also directed to the process as disclosed above, wherein component (C1) is selected from the group consisting of dibutylamine and N-methylaniline.

According to a further embodiment, the present invention is also directed to the process as disclosed above, wherein component (C2) is selected from the group consisting of dimethylcyclohexylamine (DMCHA).

Suitable amounts for the component (C1) used are preferably in the range of 0.1 to 3 % by weight, preferably 0.1 to 2 % by weight, more preferably 0.2 to 1 % by weight, in particular 0.5 to 0.8 % by weight based on the reaction mixture.

Suitable amounts for the component (C2) used are preferably in the range of 0.01 to 2 % by weight, preferably 0.1 to 1 % by weight, in particular 0.2 to 0.5 % by weight based on the reaction mixture.

Furthermore, component (C3) may be added to the catalyst composition which is added to the reaction mixture. Component (C3) may be selected from compounds with a molecular weight of less than 400 g/mol and with a dielectric constant from 5 to 70, preferably 10-50, more particular in the range of 12 to 45, in particular from 10 to 20. Mixtures of two or more of these may also be used in the context of the present invention.

Suitable compounds as component (C3) in the context of the present invention are for example cyclohexanone, propylene carbonate, triethylphosphate, preferably triethylphosphate.

Preferably, phosphates such as for example triethylphosphate (TEP) may be used as component (C3) in step (i). Suitable amounts for the component (C3) used are preferably in the range of 1 to 10 % by weight, preferably 1 to 5 % by weight, more preferably 1 to 3 % by weight, in particular 1 to 2 % by weight based on the reaction mixture.

According to a further embodiment, the present invention is also directed to the process as disclosed above, wherein triethylphosphate (TEP) is used as component (C3), preferably in an amount in the range of 1 to 3 % by weight.

Components (C1), (C2) and (C3) can be added as a mixture or separately.

Suitable additives may also be used. Any auxiliary and additive substances known for the production of polyurethanes may be used. Examples include surface-active substances, blowing agents, foam stabilizers, cell regulators, release agents, fillers, dyes, pigments, plasticizers, flame retardants, hydrolysis stabilizers, fungistatic and bacteriostatic substances and also antioxidants. Such substances are known and described for example in "Kunststoffhandbuch", volume 7, Polyurethane", Carl Hanser Verlag, 3rd edition 1993, chapters 3.4.4 and 3.4.6 to 3.4.11.

The reaction according to step (i) may be conducted at temperature higher than 60°C, more preferable higher than 80°C, even more preferable higher than 100°C and the most preferable higher than 120°C or at 140°C.

The reaction according to step (i) may be conducted in the presence of a solvent. Suitable are for example polar aprotic solvents. The reaction according to the present invention may also be conducted with only small amounts of solvent present or in the absence of a solvent. According to a further embodiment, the present invention is also directed to the process as disclosed above, wherein a solvent (S1) is present in step (i) in an amount of less than 30 % by weight, preferably less than 20% by weight, in particular less than10% by weight based on the reaction mixture. Preferably the process is carried out using an amount of less than 5% by weight of solvent or even in the absence of solvent, i.e. the process is solvent-free.

According to the present invention also the addition of further additives at the end of prepolymer synthesis is possible, for example to adjust the properties of the prepolymer. Suitable additives may be added in an amount of up to 30 % by weight. It is for example possible to use additives to deactivate remaining catalyst (C2) in the prepolymer composition obtained, for example diethylene glycol bis-chloroformate (DIBIS) may be used.

The prepolymer obtained may be composed of structurally and molecularly uniform molecules or comprise a mixture of molecular-structurally different molecules.

The content of imide groups in the prepolymer obtained according to the process of the present invention may vary. Typically, the content is in the range of 1 to 20% by weight of imides, particularly in the range of from 1 to 10 % by weight, preferably in the range of from 1 to 5 % by weight, in particular in the range of 2 to 4 % by weight.

Thus, according to a further embodiment, the present invention is also directed to the process as disclosed above, wherein the prepolymer contains 1 to 20 % by weight of imides.

The prepolymer obtained may in addition to the imide groups in the polymer scaffolding comprise end- or side-disposed functional groups, which may be anhydride or acid groups, amide, urethane or urea groups, as well as free or blocked NCO groups.

According to a further aspect, the present invention is also directed to a prepolymer obtained or obtainable according to the process according to the present invention. The prepolymer preferably has an isocyanate content (NCO content) in the range of 1% to 45%, more preferably 2% to 40%, particularly preferably 3% to 38% and especially 10% to 35% and most preferably 15% to 30% by weight.

Prepolymers obtained according to the present invention may have an acid value below 5 mg KOH/g, preferably below 3 mg KOH/g, in particular below 2 mg KOH/g, determined according to ISO 2114:2000 where 70 mL acetone is used as solvent and potassium hydrogen phthalate is used as titer.

According to the present invention the prepolymers obtained preferably contain no catalyst which may be extracted. Preferably, the catalyst component (C1) used in the preparation of the prepolymers are incorporated in the polymer backbone.

According to the present invention it is also possible to modify the prepolymers using suitable compounds having isocyanate-reactive groups. For example, prepolymer can be reacted with polyols, used for the polyurethane preparation.

This prepolymer according to the present invention can be used in the preparation of polyurethane and allows to introduce a high density of imide groups per polymer unit which is produced. This makes it possible to generate polyurethanes having advantageous properties.

The prepolymer according to the present invention is particularly suitable for the preparation of polyurethanes. According to a further aspect, the present invention is also directed to the use of a prepolymer obtained or obtainable according to a process as disclosed above or a prepolymer according to the present invention for the preparation of polyurethanes.

Processes for preparing polyurethanes are in principle known to the person skilled in the art. Typically, the prepolymer according to the invention can be brought into contact with a composition comprising at least one polyol to prepare a polyurethane. According to the present invention, the polyurethane may be a compact polyurethane or also a polyurethane foam. Suitable methods for preparing polyurethanes are in principle known to the person skilled in the art.

According to a further aspect, the present invention is also directed to a process for preparing a polyurethane at least comprising step (a)
(a) reacting a prepolymer obtained or obtainable according to a process according to the present invention or a prepolymer as disclosed above with a composition (P) comprising at least one polyol.

The prepolymer according to the present invention may be used as such or in a mixture comprising the prepolymer and further compounds, in particular further isocyanates. For the purpose of the present invention, principally any isocyanate can be employed in step (a), in particular the isocyanates disclosed above as suitable isocyanates (I1).

In the following, the isocyanate is referred to as (i1) but may also be referred to as component (a). The polyol is also referred to as component (b) in the following. Further components may be added in the process such as chain extenders or cross-linkers (c), additives (d), blowing agents (e) and catalysts (f). According to the present invention, the composition (P) contains one or more polyols (b), chain extenders and cross linkers (c), additives (d), optionally blowing agents (e), and optionally catalyst (f).

Suitable polyols (b) are in principle known to the person skilled in the art. The polyol composition may comprise suitable compounds having at least one functional group comprising active hydrogen reactive towards isocyanate groups.

The term "active hydrogen" refers to compounds having at least one functional group which is capable of reacting with an isocyanate group in an addition reaction, thereby forming a chemical bond between carbon atom of the isocyanate group and one of the atoms of the functional group. These functional groups are also termed "active hydrogen functional group" or "isocyanate reactive group". Typical active hydrogen functional groups of active hydrogen compounds are the hydroxyl group (OH), the mercapto group (SH), the primary amino group (NH2) and also the secondary amino group (NH). The aforementioned functional groups will react with isocyanate groups to form a urethane, a urea or a thiourethane group, respectively. Preferably, polyols are used according to the present invention.

Principally, any polyol conventionally used for the preparation of polyurethanes can be used. The type of polyol may depend on the desired purpose of the application. Suitable polyol compounds are polyester polyols, including in particular aliphatic polyester polyols and aliphatic aromatic polyester polyols, polyestercarbonate polyols, polyether-ester polyols, aliphatic polycarbonate polyols, polyacrylate polyols, polyolefine polyols, aliphatic polyetherols and mixtures thereof. In preferred groups of embodiments, the polyol is selected from polyester polyols, in particular aliphatic polyester polyols and aliphatic aromatic polyester polyols, aliphatic polycarbonate polyols, aliphatic polyetherols and mixtures thereof. In particular, the polyol composition comprises a polyester polyol and/or an aliphatic polyether polyol as described herein. Especially, the polyol is selected from polyester polyols, aliphatic polyether polyols and combinations thereof.

Examples thereof are a polyester diol, a polyesterol, a polyether glycol, especially a polypropylene glycol, a polyethylene glycol, a polypropylene ethylene glycol, a poly(tetramethylene ether) glycol or mixtures thereof. A mixture can be understood as meaning for example a copolymer, but also a mixture of polymers. The polyols preferably have an average molecular weight in the range from 200 g/mol to 8000 g/mol, especially in the range from 250 g/mol to 6000 g/mol and more prefer ably in the range from 300 g/mol to 2000 g/mol, measured according to DIN 55672-1:2016-03 and - differing from 25 the DIN norm -using THF as solvent.

In a further embodiment of the process according to the present invention, polyol has an OH number of 10 mg KOH/g to 1000 mg KOH/g. More particularly, polyol can have an OH number of 20 mg KOH/g to 500 mg KOH/g, measured according to EN ISO 4629-1:2016.

Further compounds may be added in step (a), for example one or more further active hydrogen compounds, also summarized as chain extenders (c) in the following. Generally, said active hydrogen compounds have a molecular weight of at most 400 g/mol. Suitable active hydrogen compounds may have 1, 2, 3 or 3 and preferably have 2 functional groups capable of reacting with the isocyanate group, which are in particular selected from OH, NH2 or SH. In particular, suitable compounds are selected compounds having a molecular weight of at most 400 g/mol and having 2 OH groups per molecule as sole functional groups.

In particular, the active hydrogen compounds (c) may be selected from aliphatic diol compounds having 2 to 20 carbon atoms, for example ethylene glycol, 1,2-propanediol, 1,3-propanediol, 1,1-dimethylethane-1,2-diol, 2-butyl-2- ethyl-1,3-propanediol, 2-ethyl-1,3-propanediol, 2-methyl-1,3-propanediol, neopentyl glycol, hydroxypivalic acid neopentyl glycol ester, 1,2-, 1,3- and 1,4-butanediol, 1,6-hexanediol, 1,10-decanediol, 2-ethyl-1,3-hexanediol, 2,4-diethyloctane-1,3-diol, - cyclic aliphatic diol compounds having 3 to 14 carbon atoms, for example tetramethylcyclobu-tanediol, 1,2-, 1,3- and 1,4-cyclohexanediol, 1,1-, 1,2-, 1,3- and 1,4-cyclohexanedimethanol, 1,2-, 1,3- or 1,4-cyclooctanediol, norbornanediol, pinanediol, decalindiol, 2,2-bis(4-hydroxycyclohexyl)propane, bis(4-hydroxycyclohexane)isopropylidene; and - aliphatic aminoalcohols having 2 to 20 carbon atoms, such as monoethanolamine, diethanolamine, monopropanolamine, dipropanolamine, N-methyl diethanolamine and N-methyl dipropanolamine.

Crosslinking agents may be used as component (c). Suitable compounds can be compounds of molar mass less than 500 g/mol which have more than two hydrogens reactive toward isocyanate. Crosslinking agents may be used in an amount of from 0.5 to 60% by weight, preferably from 1 to 40% by weight and particularly preferably from 1.5 to 20% by weight, based on the sum of the components used.

Suitable crosslinking agents are mentioned by way of example in "Kunststoffhandbuch [Plastics handbook], volume 7, Polyurethane [Polyurethanes]", Carl Hanser Verlag, 3rd edition 1993, chapter 3.2 and 3.3.2.

It is moreover possible to use auxiliaries and/or additives (component (d)). It is possible here to use any of the auxiliaries and additives known for the production of polyurethanes. Mention may be made by way of example of surface-active substances, foam stabilizers, cell regulators, release agents, fillers, dyes, pigments, flame retardants, hydrolysis stabilizers, fungistatic substances, and bacteriostatic substances. These substances are known and are described by way of example in "Kunststoffhandbuch [Plastics handbook], volume 7, Polyurethane [Polyurethanes]", Carl Hanser Verlag, 3rd edition 1993, chapter 3.4.4 and 3.4.6 to 3.4.11.

Typical catalysts (f) employable for production of polyurethanes include for example amidines, such as 2,3-dimethyl-3,4,5,6-tetrahydropyrimidine, tertiary amines, such as triethylamine, tributylamine, dimethylbenzylamine, N-methyl-, N-ethyl- and N-cyclohexylmorpholine, N,N,N',N'-tetramethylethylenediamine, N,N,N',N'-tetramethylbutanediamine, N,N,N',N'-tetramethylethylenediamine, pentamethyldiethylenetriamine, tetramethyldiaminoethyl ether, bis(dimethylaminopropyl)urea, dimethylpiperazine, 1,2-dimethylimidazole, 1-azabicyclo[3.3.0]octane and preferably 1,4-diazabicyclo[2.2.2]octane, and alkanolamine compounds such as triethanolamine, triisopropanolamine, N-methyl- and N-ethyldiethanolamine and dimethylethanolamine. Examples of incorporable catalysts that may be used are bis(dimethylaminopropyl)urea, bis(N,N-dimethylaminoethoxyethyl) carbamate, dimethylaminopropylurea, N,N,N-trimethyl-N-hydroxyethylbis(aminopropylether), N,N,N-trimethyl-N-hydroxyethylbis(aminoethylether), diethylethanolamine, bis(N,N-dimethyl-3-aminopropyl)amine, dimethylaminopropylamine, 1-(3-aminopropyl)pyrrolidine, 3-dimethylanninopropyl-N, N-dimethylpropane-1,3-diamine, dimethyl-2-(2-aminoethoxyethanol), (1,3-bis(dimethylamino)propan-2-ol), N,N-bis(3-dimethylaminopropyl)-N-isopropanolamine, bis(dimethylaminopropyl)-2-hydroxyethylamine, N,N,N-trinnethyl-N-(3-aminopropyl)-bis(aminoethylether), 1,4-diazabicyclo[2.2.2]octane-2-methanol and 3-dimethylaminoisopropyl diisopropanolamine or mixtures thereof. Likewise contemplated are organic metal compounds, preferably organic tin compounds, such as tin(ll) salts of organic carboxylic acids, for example tin(II) acetate, tin(II) octoate, tin(II) ethylhexoate and tin(ll) laurate, and the dialkyltin(IV) salts of organic carboxylic acids, for example dibutyltin diacetate, dibutyltin dilaurate, dibutyltin maleate and dioctyltin diacetate, and also bismuth carboxylates, such as bismuth(III) neodecanoate, bismuth 2-ethylhexanoate and bismuth octanoate, or mixtures thereof. The organic metal compounds may be used either alone or preferably in combination with strongly basic amines.

The polyurethane obtained according to the process may be a compact material which may for example be used as an adhesive. The polyurethane may also be a polyurethane foam.

When the polyurethane according to the invention is to be in the form of a polyurethane foam, reaction mixtures according to the invention further comprise blowing agent (e). Any blowing agents known for the production of polyurethanes may be employed. These may comprise chemical and/or physical blowing agents. Such blowing agents are described in, for example, " Kunststoffhandbuch [Plastics Handbook], volume 7, Polyurethane [Polyurethanes]", Carl Hanser Verlag, 3rd edition 1993, chapter 3.4.5. "Chemical blowing agents" is understood to mean compounds that form gaseous products by reaction with isocyanate. Examples of such blowing agents are water or carboxylic acids. "Physical blowing agents" is understood to mean compounds that are dissolved or emulsified in the input materials of polyurethane production and vaporize under the conditions of polyurethane formation. Examples thereof include hydrocarbons, halogenated hydrocarbons and other compounds, for example perfluorinated alkanes such as perfluorohexane, chlorofluorohydrocarbons, and ethers, esters, ketones, acetals and/or liquid carbon dioxide. The blowing agent may be employed in any desired amount. The blowing agent is preferably employed in an amount such that the resulting polyurethane foam has a density of 10 to 850 g/L, particularly preferably 20 to 800 g/L and in particular 25 to 500 g/L. It is particularly preferable to employ blowing agents comprising water.

The present invention is also directed to a polyurethane obtained or obtainable according to a process as disclosed above.

Further embodiments of the present invention can be found in the claims and the examples. It will be appreciated that the features of the subject matter/processes/uses according to the invention that are mentioned above and elucidated below are usable not only in the combination specified in each case but also in other combinations without departing from the scope of the invention. For example, the combination of a preferred feature with a particularly preferred feature or of a feature not characterized further with a particularly preferred feature etc. is thus also encompassed implicitly even if this combination is not mentioned explicitly.

Illustrative embodiments of the present invention are listed below, but these do not restrict the present invention. In particular, the present invention also encompasses those embodiments which result from the dependency references and hence combinations specified hereinafter.
1. Process for preparing a prepolymer comprising step (i)
   (i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups.
2. Process according to embodiment 1, wherein the catalyst composition contains components (C1), (C2) and optionally (C3).
3. Process according to any one of embodiments 1 or 2, wherein the anhydride of a polycarboxylic acid with at least two carboxylic groups (DA) is pyromellitic dianhydride (PMDA).
4. Process according to any one of embodiments 1 to 3, wherein the isocyanate (i1) is selected from the group of 2,4'- and 4,4'-MDI, polymeric MDI, 2,4- and 2,6-TDI isomers, aliphatic isocyanates and mixtures thereof.
5. Process according to any one of embodiments 1 to 3, wherein the isocyanate (i1) is selected from prepolymers with an NCO content in the range of from 0.1 to 25 %.
6. Process according to any one of embodiments 1 to 5, wherein catalyst component (C1) is selected from the group consisting of the group consisting of dibutylamine and N-methylaniline.
7. Process according to any one of embodiments 1 to 6, wherein catalyst component (C2) is selected from the group consisting of dimethylcyclohexylamine (DMCHA).
8. Process according to any one of embodiments 1 to 7, wherein triethylphosphate (TEP) is added in step (i) as catalyst component (C3), preferably in an amount in the range of 1 to 3 % by weight.
9. Process according to any one of embodiments 1 to 8, wherein a solvent (S1) is present in step (i) in an amount of less than 30% by weight based on the reaction mixture.
10. Process according to any one of embodiments 1 to 9, wherein the prepolymer contains 1 to 20 % by weight of imides.
11. Process for preparing a prepolymer comprising step (i)
   (i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups,
   wherein the catalyst composition contains components (C1), (C2) and optionally (C3).
12. Process according to embodiment 11, wherein catalyst component (C1) is selected from the group consisting of the group consisting of dibutylamine and N-methylaniline.
13. Process according to any one of embodiments 11 or 12, wherein catalyst component (C2) is selected from the group consisting of dimethylcyclohexylamine (DMCHA).
14. Process according to any one of embodiments 11 to 13, wherein triethylphosphate (TEP) is added in step (i) as catalyst component (C3), preferably in an amount in the range of 1 to 3 % by weight.
15. Process for preparing a prepolymer comprising step (i)
   (i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups,
   wherein the catalyst composition contains components (C1), (C2) and optionally (C3), and wherein the anhydride of a polycarboxylic acid with at least two carboxylic groups (DA) is pyromellitic dianhydride (PMDA).
16. Process according to embodiment 15, wherein catalyst component (C1) is selected from the group consisting of the group consisting of dibutylamine and N-methylaniline.
17. Process according to any one of embodiments 15 or 16, wherein catalyst component (C2) is selected from the group consisting of dimethylcyclohexylamine (DMCHA).
18. Process according to any one of embodiments 15 to 17, wherein triethylphosphate (TEP) is added in step (i) as catalyst component (C3), preferably in an amount in the range of 1 to 3 % by weight.
19. Process for preparing a prepolymer comprising step (i)
   (i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups,
   wherein a solvent (S1) is present in step (i) in an amount of less than 30% by weight based on the reaction mixture.
20. Process according to embodiment 19, wherein catalyst component (C1) is selected from the group consisting of the group consisting of dibutylamine and N-methylaniline.
21. Process according to any one of embodiments 19 or 20, wherein catalyst component (C2) is selected from the group consisting of dimethylcyclohexylamine (DMCHA).
22. Process according to any one of embodiments 19 to 21, wherein triethylphosphate (TEP) is added in step (i) as catalyst component (C3), preferably in an amount in the range of 1 to 3 % by weight.
23. Process for preparing a prepolymer comprising step (i)
   (i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups,
      wherein the catalyst composition contains components (C1), (C2) and optionally (C3),
      wherein the anhydride of a polycarboxylic acid with at least two carboxylic groups (DA) is pyromellitic dianhydride (PMDA),
      wherein catalyst component (C1) is selected from the group consisting of the group consisting of dibutylamine and N-methylaniline, catalyst component (C2) is selected from the group consisting of dimethylcyclohexylamine (DMCHA),
      wherein triethylphosphate (TEP) is added in step (i) as catalyst component (C3), preferably in an amount in the range of 1 to 3 % by weight, and
      wherein a solvent (S1) is present in step (i) in an amount of less than 30% by weight based on the reaction mixture.
24. Prepolymer obtained or obtainable according to a process according to any one of embodiments 1 to 23.
25. Prepolymer obtained or obtainable according to a process for preparing a prepolymer comprising step (i)
   (i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups.
26. Prepolymer according to embodiment 25, wherein the catalyst composition contains components (C1), (C2) and optionally (C3).
27. Prepolymer according to any one of embodiments 25 or 26, wherein the anhydride of a polycarboxylic acid with at least two carboxylic groups (DA) is pyromellitic dianhydride (PMDA).
28. Prepolymer according to any one of embodiments 25 to 27, wherein the isocyanate (11) is selected from the group of 2,4'- and 4,4'-MDI, polymeric MDI, 2,4- and 2,6-TDI isomers, aliphatic isocyanates and mixtures thereof.
29. Prepolymer according to any one of embodiments 25 to 27, wherein the isocyanate (11) is selected from prepolymers with an NCO content in the range of from 0.1 to 25 %.
30. Prepolymer according to any one of embodiments 25 to 29, wherein catalyst component (C1) is selected from the group consisting of the group consisting of dibutylamine and N-methylaniline.
31. Prepolymer according to any one of embodiments 25 to 30, wherein catalyst component (C2) is selected from the group consisting of dimethylcyclohexylamine (DMCHA).
32. Prepolymer according to any one of embodiments 25 to 31, wherein triethylphosphate (TEP) is added in step (i) as catalyst component (C3), preferably in an amount in the range of 1 to 3 % by weight.
33. Prepolymer according to any one of embodiments 25 to 32, wherein a solvent (S1) is present in step (i) in an amount of less than 30% by weight based on the reaction mixture.
34. Prepolymer according to any one of embodiments 25 to 33, wherein the prepolymer contains 1 to 20 % by weight of imides.
35. Use of a prepolymer obtained or obtainable according to a process according to any one of embodiments 1 to 24 or a prepolymer according to any one of embodiments 25 to 34 for the preparation of polyurethanes.
36. Process for preparing a polyurethane at least comprising step (a)
   (a) reacting a prepolymer obtained or obtainable according to a process according to any one of embodiments 1 to 24 or a prepolymer according to any one of embodiments 25 to 34 with a composition (P) comprising at least one polyol.
37. Polyurethane obtained or obtainable according to a process according to embodiment 36.

The invention is further described by examples. The examples relate to practical and in some cases preferred embodiments of the invention that do not limit the scope of the invention.

### EXAMPLES

### 1. List of compounds used

| | |
|---|---|
| Polyisocyanate 1: | Polymeric 4,4'-diphenylmethane diisocyanate ("polymer-MDI"), having on average 2.7 isocyanate groups, NCO content 31.5 wt%. |
| Polyisocyanate 2: | Isocyanurate of hexamethylene diisocyanate, having on average 3.6 isocyanate groups, NCO content 22 wt%. |
| PMDA: | 1,2,4,5-Benzenetetracarboxylic anhydride. |
| Polyol 1: | polyester polyol obtained from adipic acid, 1,4-butanediol and monoethylene glycol, Mw=2000 g/mol, OH value=56 mgKOH/g. |
| Chain extender 1: | 1,4-butanediol |
| Chain extender 2: | benzenedimethanol |
| Additive 1: | diethylene glycol bis-chloroformate (DIBIS) |
| TEP: | triethyl phosphate |
| Catalyst 1: | mixture of 25wt% DABCO in 75wt% 1,4-butanediol. |

### 2. Patent examples:

### Example 1: Synthesis of imide prepolymer 1

10.5 g of PMDA and 200.0 g of polyisocyanate 1 were added into a 500 mL dry 3-neck flask equipped with a thermometer and the mixture was stirred at 100 °C under Argon atmosphere. Then 1.2 g of N-methylaniline and 0.7 g of DMCHA were dissolved in 2.5 mL TEP and the solution was injected into the flask. The mixture was heated up to 140 °C and reaction was completed within 7 h according to ¹³C NMR. Dark brown viscous liquid was obtained with NCO content 26.2% and acid value 2 mgKOH/g.

### Example 2: Synthesis of imide prepolymer 2

42.1 g of PMDA and 800.0 g of polyisocyanate 1 were added into a 1 L dry 3-neck flask equipped with a thermocouple and the mixture was stirred by mechanical stirrer at 100 °C under N₂ atmosphere. Then 5.7 g of dibutylamine and 2.8 g of DMCHA were dissolved in 10 mL TEP and the solution was injected into the flask. The mixture was heated up to 140 °C and reaction was completed within 10 h according to ¹³C NMR. Dark brown viscous liquid was obtained with NCO content: 29.1% and acid value 3 mgKOH/g.

### Example 3: Synthesis of imide prepolymer 3

10.5 g of anhydride PMDA and 200.0 g of polyisocyanate 2 were added into a 500 mL dry 3-neck flask equipped with a thermometer and the mixture was stirred at 100 °C under Ar atmosphere. Then 1.4 g of dibutylamine and 0.7 g of DMCHA were dissolved in 2.5 mL TEP and the solution was injected into the flask. The mixture was heated up to 140 °C and reaction was completed within 12 h according to ¹³C NMR. Dark brown viscous liquid was obtained with NCO content of 17.9% and acid value <0.5 mgKOH/g.

### Example 4: preparation of imide containing PU material

18.9 g of 1,4-butanediol and 0.06 g of additive 1 were mixed with 106.8 g of polyol 1 in a polypropylene cup and vacuumed using a speed mixer for 20 min at 80 °C. Imide prepolymer 1 was added in another polypropylene cup and vacuumed for 30 min at 140 °C using a speedmixer. Then 80.0 g of imide prepolymer 1 was added into polyol components and the mixture was vacuumed for 30 s using a speedmixer. After that, the mixture was poured on a metal mold which was pre-heated at 80 °C. After the polymerization of the mixture, the material was further cured in 90 °C oven overnight.

### Comparative example 1: preparation of reference PU material 1

18.7 g of 1,4-butanediol, 3.5 g of benzenedimethanol, 0.2 g of catalyst 1 and 1 g of TEP were mixed with 106.8 g of polyol 1 in a polypropylene cup and vacuumed using a speed mixer for 20 min at 80 °C. Polyisocyanate 1 was added in another polypropylene cup and vacuumed for 30 min at 80 °C using a speedmixer. Then 76.5 g of polyisocyanate 1 was added into polyol components and the mixture was vacuumed for 30 s using a speedmixer. After that, the mixture was poured on a metal mold which was pre-heated at 80 °C. After the polymerization of the mixture, the material was further cured in 90 °C oven overnight.

### Comparative example 2: preparation of reference PU material 2

18.3 g of 1 ,4-butanediol, 0.2 g of catalyst 1 and 1 g of TEP were mixed with 104.7 g of polyol 1 in a polypropylene cup and vacuumed using a speed mixer for 20 min at 80 °C. Polyisocyanate 1 was added in another polypropylene cup and vacuumed for 30 min at 80 °C using a speedmixer. Then 70 g of polyisocyanate 1 was added into polyol components and the mixture was vacuumed for 30 s using a speedmixer. After that, the mixture was poured on a metal mold which was pre-heated at 80 °C. After the polymerization of the mixture, the material was further cured in 90 °C oven overnight.

**Table 1 Recipe in weight parts of example 1 and comparative example 1 and 2**

| | Patent example 1 | Comparative example 1 | Comparative example 2 |
|---|---|---|---|
| Imide prepolymer 1 | 38.9 | | |
| Polyisocyanate 1 | | 37.0 | 36.0 |
| Polyol 1 | 51.9 | 51.7 | 53.9 |
| Chain extender 1 | 9.2 | 9.0 | 9.4 |
| Chain extender 2 | | 1.7 | |
| Additive 1 | 0.03 | | |
| Catalyst 1 | | 0.1 | 0.1 |
| TEP | | 0.5 | 0.5 |

**Table 2 Thermal and mechanical properties**

| | Patent example 1 | Comparative example 1 | Comparative example 2 |
|---|---|---|---|
| Shore A | 96 | 88 | 86 |
| E modulus | 55 ± 2 MPa | 15 ± 2 MPa | 10 ± 2 MPa |
| Char at 800 °C | 16.9% | 10.9% | 12.4% |
| Total heat release (MJ/m²) | 78.0 | 91.2 | 82.3 |
| Total smoke production (m²) | 12.45 | 15.74 | 18.3 |

### 3. Methods - Description of the thermal stability, tensile test and fire property tests:

### 3.1 Measurement of the char formation at 800 °C:

### Thermogravimetric analysis (TGA):

TGA analyses were performed using TGA550 (TA instruments). Samples (5-10 mg) were heated from 40 to 800 °C under nitrogen atmosphere at the rate of 10 °C/min.

### 3.2 Tensile tests:

Tensile tests were performed according to DIN 53504:2017 with elongation rate 20 mm/min.

Tensile tests were performed on Z010 (Zwick/Roell). with 500 N load cell using dumbbell-shaped specimens (effective length:33 mm, width:6 mm, and measured thickness around 2 mm) with a strain rate of 20 mm/min.

### 3.3 Cone calorimeter test:

Cone calorimetry was carried out in iCone calorimeter (Fire Testing Technology Limited) under a heat flux of 25 kW/m² according to ISO 5660-1 :2015-03/Amd 1 :2019-08 standard. The samples were cut into 100×100×4 mm³ size and wrapped with aluminum foil for measurement.

### Literature cited:

WO 2011/147723 A1
WO 2014/023796 A1
US 2014/0154407 A1
US 2009/0240019 A1
CN 103755956 A
B. Masiulanis et al. J. Appl. Polym. Sci., 1985, 30, 2731-2741, M. Meena et al. J. Appl. Polym. Sci., 2022, 139, e52508
"Kunststoffhandbuch [Plastics Handbook], volume 7, Polyurethane [Polyurethanes]", Carl Hanser Verlag, 3rd edition 1993, chapter 3.1, chapter 3.2 and 3.3.2, chapters 3.4.4 and 3.4.5 and 3.4.6 to 3.4.11,

## Claims

1. Process for preparing a prepolymer comprising step (i)
(i) reacting an anhydride of a polycarboxylic acid with at least two carboxylic groups (DA) and an isocyanate (i1) in the presence of catalyst composition containing component (C1) and optionally one or more of components (C2) and (C3) to obtain a prepolymer comprising imide groups.

2. Process according to claim 1, wherein the catalyst composition contains components (C1), (C2) and optionally (C3).

3. Process according to any one of claims 1 or 2, wherein the anhydride of a polycarboxylic acid with at least two carboxylic groups (DA) is pyromellitic dianhydride (PMDA).

4. Process according to any one of claims 1 to 3, wherein the isocyanate (i1) is selected from the group of 2,4'- and 4,4'-MDI, polymeric MDI, 2,4- and 2,6-TDI isomers, aliphatic isocyanates and mixtures thereof.

5. Process according to any one of claims 1 to 3, wherein the isocyanate (i1) is selected from prepolymers with an NCO content in the range of from 0.1 to 25 %.

6. Process according to any one of claims 1 to 5, wherein catalyst component (C1) is selected from the group consisting of the group consisting of dibutylamine and N-methylaniline.

7. Process according to any one of claims 1 to 6, wherein catalyst component (C2) is selected from the group consisting of dimethylcyclohexylamine (DMCHA).

8. Process according to any one of claims 1 to 7, wherein triethylphosphate (TEP) is added in step (i) as catalyst component (C3), preferably in an amount in the range of 1 to 3 % by weight.

9. Process according to any one of claims 1 to 8, wherein a solvent (S1) is present in step (i) in an amount of less than 30% by weight based on the reaction mixture.

10. Process according to any one of claims 1 to 9, wherein the prepolymer contains 1 to 20 % by weight of imides.

11. Prepolymer obtained or obtainable according to a process according to any one of claims 1 to 10.

12. Use of a prepolymer obtained or obtainable according to a process according to any one of claims 1 to 10 or a prepolymer according to claim 11 for the preparation of polyurethanes.

13. Process for preparing a polyurethane at least comprising step (a)
(a) reacting a prepolymer obtained or obtainable according to a process according to any one of claims 1 to 10 or a prepolymer according to claim 11 with a composition (P) comprising at least one polyol.

14. Polyurethane obtained or obtainable according to a process according to claim 13.
